(19) **Europäisches Patentamt / European Patent Office / Office européen des brevets**

(11) **EP 2 804 114 A1**

(12) **EUROPEAN PATENT APPLICATION**

(43) Date of publication:
**19.11.2014 Bulletin 2014/47**

(51) Int Cl.:
**G06F 17/30** (2006.01)

(21) Application number: **13168088.6**

(22) Date of filing: **16.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FUJITSU LIMITED**
**Kawasaki-shi,**
**Kanagawa 211-8588 (JP)**

(72) Inventors:
• **Carvalho, Nuno**
  **London, W5 4DW (GB)**
• **Hu, Bo**
  **Huntingdon, Cambridgeshire PE29 6JL (GB)**

(74) Representative: **Hutchison, James**
**Haseltine Lake LLP**
**300 High Holborn**
**London, Greater London WC1V 7JH (GB)**

(54) **Database controller, method, and program for managing a distributed data store**

(57)   Embodiments include a database controller for a database of information encoded as a set of data items, the database controller comprising: a segment control module configured to divide the set of data items into a series of segments, each segment comprising each of the data items falling within defined lower limit and upper limit values of an ordering metric used to place the data items in order; and an adaptive segment locator module configured to manage the distribution of the series of segments among a plurality of storage units, including selecting which segments from among the series of segments to co-locate on the same storage unit based on historical data representing read operations performed on the database.

FIGURE 1

**Description**

The present invention lies in the field of data storage and data mining. In particular, the invention relates to the handling of range queries submitted to a database of information encoded as a set of data items.

Distributed data stores, for example, graph databases, have been intensively investigated in the past few years. Leading technical solutions include a variety of data partition approaches and/or the data caching solutions that are tuned against particular representations. Both solutions are not ideal. Data partitioning and/or clustering is intrinsically complex and can be NP-complete in general. When using graph representation for an ontology, it is difficult to maintain data balance and minimum data replication across multiple storage units while at the same time ensuring that no knowledge is lost during the distribution process. Therefore, inter sub-graph reference happens frequently leading to a majority of the graph partition and clustering approaches failing to significantly reduce inter data-node communication. Similarly, the widely used caching algorithms are not designed for graph representation. Such problems are not restricted to graph data, and can also arise in the case of other types of distributed data storage.

There are several approaches of how to store and retrieve data from a distributed data store such as a Key Value store. One approach is to use an ordered key/value store that enables executing range queries over the keys. This approach improves the performance of Scan operations, since the system does not need to read and filter data from the entire set of servers. Another approach is to store data in a regular (i.e. not ordered) key/value store and, since the order of the keys does not need to be maintained, read operations can be optimized by co-locating data that is read together. This approach optimizes traversal operations on distributed data stores. However, due to the difficulty of maintaining an ordered data set while moving data around (co-locating) to optimize future read operations, it does not generally observe the order of keys and is expensive for scan operations.

Embodiments of the present invention include a database controller for a database of information encoded as a set of data items, the database controller comprising: a segment control module configured to divide the set of data items into a series of segments, each segment comprising each of the data items falling within defined lower limit and upper limit values of an ordering metric used to place the data items in order; and an adaptive segment locator module configured to manage the distribution of the series of segments among a plurality of storage units, including selecting which segments from among the series of segments to co-locate on the same storage unit based on historical data representing read operations performed on the database.

Embodiments use a segment control module, which may use a data format such as a prefix tree, to divide the set of data items into indexed segments. The segments are ordered and hence the segment structure supports range queries. The physical location of the data segments in terms of which storage unit each segment is stored is managed by an adaptive locator module, thus data usage history can be taken into account in the distribution of segments among storage units.

Embodiments of the present invention combine an ordered key-value store (the segments are logically ordered) with a flexibility in data locations. Maintaining a record of a logical ordering of the segments, along with a mapping between the logical location or segment ID and the physical location (in terms of a storage unit) of the segments, there are no constraints on where to store the segments, For example, logically adjacent segments do not need to be stored on the same storage unit. The fact that the segments are divided in a manner in which they each cover a specified range of ordering metric values enables efficient handling of data read/write operations, for example, range queries. Effectively, the segment or segments covering a particular value or range of values of the ordering metric can be determined, so that a data read/write operation for a known value or range of values of the ordering metric (inherent in the data itself) enables the pertinent segment IDs to be identified. The segments can be distributed based on historical data representing read operations performed on the database, and therefore, performance can be improved by tailoring the distribution to reduce traversal operations across storage unit boundaries. The adaptive segment locator enables segment IDs to be mapped to physical storage unit addresses.

Storage units are identifiable by an ID such as a physical address or a hash of a physical address. A storage unit may be a storage server or a storage node, or may be a particular component such as an HDD within a computer or server. The storage units may include cache memories to facilitate query handling and certain other read/write operations. The storage units are connectable to the database controller and possibly also to one another, by a wired or wireless network or by some other means.

The process of distributing segments to storage units performed by the adaptive segment locator module includes selecting which segments from among the series of segments to co-locate on the same storage unit based on historical data representing read operations performed on the database. Depending on the relative sizes of the data segments and the storage units, at least one pair of segments will be placed on the same storage unit. Indeed, it may be that storage units store more than two segments, and the same principles apply, that is, the selection of which segments to co-locate on a particular storage unit is dependent upon historical data representing read operations performed on the database. Read operations may be, for example, range queries, and may also include graph traversal operations.

It is desirable to minimise the number of storage units accessed in a single read operation, and hence embodiments of the present invention facilitate a distribution of segments which reduces read operations across storage unit boundaries (in comparison to, for example, an ordered or random distribution). The historical information may be a system log or data derived from a system log, and optionally details which data items were accessed in each read operation. The information can then be used to establish how strongly associated pairings of data items are (the more times two data items are read in the same read operation, the more strongly associated the two data items are). The adaptive segment locator module uses the associations between data items (or between segments) to determine which segments to store on which storage units, and allocates segments having strongly associated data items to the same storage unit.

Embodiments may further comprise a range query handling module configured to receive a range query on the set of data items, the range query defining an upper bound and a lower bound of ordering metric values, and the range query handling module being configured to respond with a duplicate of each data item from among the set of data items which falls between the defined upper bound and lower bound of ordering metric values when the data items are placed in order with the ordering metric.

The actual storage location of data is managed by the adaptive segment locator module, which co-locates segments which may, for example, use historical data to determine which segments contain data items which have often been accessed in the same read operations and co-locate such segments on the same storage unit. The division of the set of data items into segments is performed by assigning a portion of a logical order established by the ordered data items to each segment. Thus, when a range query is to be performed, the position of the limits of the range query in relation to the segment limits in terms of values of the ordering metric enables it to be determined which segments cover at least a portion of the range of the range query. The physical locations of those segments can be retrieved from the adaptive segment locator module, and hence only storage units and segments covering a range in terms of ordering metric values which overlaps with the range query are queried. Thus, embodiments of the present invention enable efficient range querying of the stored data items without relying on the segments being stored in a particular order.

Advantageously, embodiments of the present invention enable range queries to be handled in an efficient way by establishing which storage units store segments which cover a range of ordering metric values which overlaps with the range of ordering metric values defined by the range query. Thus, performance costs associated with sending range queries indiscriminately and performing scans on storage units with no prospect of returning search results is avoided. However, unlike known database storage systems which are optimised for handling range queries, embodiments of the present invention comprise a segment control module configured to store and maintain a record, for example a logical trie such as a prefix tree, of segment IDs and the storage unit upon which each segment is stored. Thus embodiments do not require that the data items nor their encompassing segments are stored in a particular order, and therefore flexibility in the distribution of segments among storage units is enabled.

Advantageously, a logical order, for example, as established by an ordering metric such as alphabetical order or the ordering metric used to order the segments is maintained among the data items within each segment. This will aid the efficiency of responding to range queries. Alternatively, the storage units may be configured to enforce a logical order on the data items within a segment when called upon to provide data items falling within a particular range in response to a range query. For example, if the upper bound or lower bound of a query falls inside of the logically uppermost or lowermost data item in a segment, then the storage unit upon which the segment is stored is configured to execute processing to identify those items falling within the particular range and return them as query results. If required, such processing may include enforcing a logical order upon the data items within a segment, although the processing burden will be reduced if the data items are stored in a logical order.

A range query will not scan the entire set of data items. Instead, the first, last, and any intermediate segments overlapping with a range query in terms of ordering metric values can be identified, along with the storage units upon which they are stored. Hence, superfluous data requests to storage units which will not return any query results are avoided.

For example: a database controller may comprise a range query handling module which is configured to obtain the duplicates by: using the segment control module to identify which of the segments have defined upper and lower limits defining a range which at least partially overlaps a range defined by the upper bound and the lower bound; using the adaptive segment locator to identify which storage units from among the plurality of storage units store the identified segments; and issuing read requests to the identified storage units for data items falling within the upper bound and lower bound when placed in order by the ordering metric.

The segment control module may be configured to maintain (store) a record of the range covered by each segment, that is to say, a record of the segment ID and the upper and lower limit of each segment. The adaptive segment locator module may be configured to maintain (store) a record of the storage unit ID of the storage unit upon which each segment is stored.

The process of selecting which segments from among the series of segments to co-locate on the same storage unit includes calculating a score of an association metric for a plurality of permutations of segment pairs and selecting the segments to co-locate in dependence upon the scores of the association metric for the plurality of permutations of segment pairs.

The association metric provides a mechanism to use the historical data representing read operations performed on the database, which may in particular specify which data items were read in each read operation. The score of the association metric between two segments represents how closely associated the two segments have been in previous read operations. Alternatively or additionally, the score of the association metric represents how commonly data items from both of the two segments were read in the same (a single) read operation. The score of association between two segments may be based on an aggregate score of scores of an association metric which represents how closely associated pairs of data items are - that is to say, it may be a total of the scores of an association metric for each pairing of data items comprising one data item from each segment. Alternatively or additionally, the score of an association metric between two segments may be based on the highest score of an association metric which measures how closely associated pairs of data items are between any pair of data items comprising one from each segment.

It may be that adaptive segment locator module is configured to use the same considerations to decide whether to keep a segment on its current storage unit or whether to move it to another storage unit - if it has a higher score of the association metric with a segment on another storage unit than it does with any of the segments on its current storage unit then the adaptive segment locator module may decide to co-locate the segment with the segment having the higher score of the association metric.

Optionally, the process of selecting which segments from among the series of segments to co-locate on the same storage unit further includes performing an algorithm to optimise the aggregate score of the association metric between pairs of segments which are co-located on the same storage unit.

Such an algorithm may be used to determine an optimum total score of the association metric between each pair of co-located segments in the database. Otherwise, the algorithm may be configurable to pursue other policies, for example, it may be that a new storage unit is added to the system and the adaptive segment locator module is configured to execute the algorithm to determine a predetermined number or predetermined total storage area of data segments to store on the new storage unit. For example, the algorithm may simply move the segments which will maximise the scores of the association metric between parings on the storage unit, or may take into consideration the effect of moving the segments away from their current locations so that only moves which result in a net benefit are performed. It can be appreciated that there are limitless possibilities to exploit the association metric by executing algorithms at the adaptive segment locator module.

Furthermore, it can be appreciated that the design of the association metric is also configurable and can be designed to suit particular implementations. For example: it may be that the historical data representing read operations performed on the database includes a record of data items which are read in the same read operations; and the score of the association metric for a pair of segments comprises a component proportional to the number of times a data item from both of the pair of segments was read in the same read operation; and/or the score of the association metric for a pair of segments comprises a component proportional to the number of times the pair of data items, one from each of the pair of segments, which were read in the same read operation the most times, were read in the same read operation.

The score of the association metric for a pair of segments may be calculated by applying the association metric at a data item level including finding the pair of data items, one from each of the pair of segments, having the highest score of the association metric of any such pair, and setting said highest score as the score of the association metric between the pair of segments.

The precise nature of how segments are formed and identified will depend on the particular implementation of the embodiment. However, it may that each segment is identifiable from among the series of segments by a segment ID; and the segment control module is configured to maintain a record of, for each segment, the segment ID and the defined upper and lower limit of the segment.

The segment ID may be a label which is added to the segment as some form of metadata, and is unique to the segment among the series of segments. Alternatively, it may be that segments are identifiable by their range (upper and lower limits of ordering metric values) and/or by the data items which they contain. For example the segment ID of each segment may be a prefix portion of data which is common to each of the data items within the segment and which prefix portion defines the upper limit and the lower limit of the segment.

The prefix portions are sorted in a logical order in the segment control module and form an index with which the ID of the storage unit storing the segment can be retrieved from the adaptive segment locator.

Optionally, the record maintained by the segment control module is a logical trie, for example, a prefix tree. The prefix tree may also be referred to as a prefix search trie, is configured such that, starting from the first character and working forwards, any pair of prefix portions share a common route in the trie from the root until the pair of prefix portions differ from one another. The trie provides a mechanism for storing information, in this case, the different values of prefix portions, in an efficient manner in terms of storage space. At the end of a path in the trie from the common root is a leaf, which corresponds to a segment ID. Since the trie stores prefixes, each leaf represents a part of data items, and any data item beginning with the part represented by the leaf, is included in the segment identified by the leaf. In that sense, each leaf, or segment ID, defines a range having an upper and lower limit. For example, the lower limit is the prefix portion alone, and the non-inclusive upper limit is the next increment of the last value specified in the prefix portion. For example, consider data items which are stored as alphanumeric strings, and the ordering metric is alphabetical or alphanumerical order. A prefix portion "pine" defines a range having a lower limit "pine" and a non-inclusive upper limit "pinf". So that any string falling between those two alphabetical values when the data items are placed in alphabetical order is assigned to the segment having the ID "pine".

Specifically, it may be that he prefix portion of a data item is an opening portion of the data forming the data item and forms some or all of the data used to determined the order of data items by the ordering metric.

Advantageously, embodiments which use prefix portions as segment IDs and which prefix portions form part of the data used to value the data items by the ordering metric, enable the logical order of the segments to be determined by the segment IDs themselves.

It may be that the database of information is also encoded as one or more additional sets of data items and the segment control module and the adaptive segment locator module (and the range query handling module) are configured to treat each of the set of data items and the one or more additional sets of data items as a separate set of data items; each data item in the set of data items has a corresponding data item encoding the same information in each additional data set, and data elements forming the data item are ordered differently in the data item and each corresponding data item.

Advantageously, the different sets of data items range queries with values of different elements of the data item as the specified range to be searched in an efficient manner. The segments may be ordered according to the data appearing at a first position in the data item, with subsequent data having decreasing importance. Therefore, a range query can be handled more efficiently if the range is defined for data elements which appear first in a set of data items.

For example, it may be that the data items are triples, and there are one or two duplicate triple sets, the set of triples and the one or two duplicate sets have different triple elements from one another in each position of the respective fixed orders of triple elements.

The particular configurations of sets of triples defined above optimise the balance between the performance benefits deriving from handling range queries efficiently versus the overhead of storage space usage.

As an exemplary implementation, it may be that the database of information is a graph database and the set of data items encoding the graph database is a set of triples each comprising a value of each of three triple elements: subject, predicate, and object.

Relational databases store data in rows and columns. The rows and columns compose tables that need to be defined before storing the data. The definition of the tables and the relationship between data contained on these tables is called a schema. A relational database uses a fixed schema. Data graphs, otherwise referred as graph databases or graph datasets, are an alternative data representation to relational databases, and provide a representation of semantic knowledge models. Graph databases represent a significant extension over relational databases by storing data in the form of nodes and arcs, where a node represents an entity or instance, and an arc represents a relationship of some type between any two nodes. In an undirected graph, an arc from node A to node B is considered to be the same as an arc from node B to node A. In a directed graph, the two directions are treated as distinct arcs. Embodiments of the present invention include data items encoding directed or undirected graphs.

Graph databases are used in a wide variety of different applications that can be generally categorized into two major types. The first type consists of complex knowledge-based systems that have large collections of class descriptions (referred to as "knowledge-based applications"), such as intelligent decision support and self learning. The second type includes applications that involve performing graph searches over transactional data (referred to as "transactional data applications"), such as social data and business intelligence. Many applications may represent both types. However, most applications can be characterized primarily as either knowledge-based or transactional data applications. Graph databases can be used to maintain large "semantic networks" that can store large amounts of structured and unstructured data in various fields. A semantic network is used as a form of knowledge representation and is a directed graph consisting of nodes that represent concepts, and arcs that represent semantic relationships between the concepts.

Embodiments of the present invention may include one or more of several different approaches to encoding graph databases for storage. Graph data may be stored in memory as multidimensional arrays, or as symbols linked to other symbols. Another form of encoding is the use of "tuples", which are finite sequences or ordered lists of objects, each of a specified type. A tuple containing n objects is known as an "n-tuple," where n can be any non-negative integer greater than zero. A tuple of length 2 (a 2-tuple) is commonly called a pair, a 3 -tuple is called a triple, a four-tuple is called a quadruple, and so on.

A triple consists of three triple elements (tuples) each of a specified type. The type may be specified by data within the triple itself (i.e. by storing data in a form equivalent to "type=value"), or it may be metadata known in the system to apply to the triple or set of triples to which the triple belongs. For example, each triple may belong to a set of triples which encode the graph database completely, and each set is known to be composed of triples which each store a value of three triple elements in the same (i.e. a fixed) order, so that it is known that the first value is a first type of triple element, and so on.

The term 'triple element' refers generically to a type of triple element, which may be, for example, subject, object, or predicate. Particular instances of a triple element are referred to as values of triple elements. For example, the three triple elements may be subject, object, and predicate, so that a particular triple has a value of each of subject, object, and predicate. The entity being described may be referred as the subject of the triple, the range of the identified property may be referred to as the object, and the relationship between the range and the entity may be referred to as the predicate. The triples provide for encoding of graph data by characterising the graph data as a plurality of subject-predicate-object expressions. For example, the subject may denote a Web resource (for example, via a URI), the predicate denote a particular trait, characteristic, or aspect of the resource, and the object denote an instance, range, or example, of that trait, characteristic, or aspect. In other words, a collection of triple statements intrinsically represents directional graph data. The RDF standard defines a formalised structure for such triples, and the triples in embodiments of the present invention may be RDF triples.

Furthermore, it may be that the first one or the first two triple elements in the fixed order of the three triple elements are assigned as a prefix portion composing the segment IDs, and are used for indexing purposes in embodiments of the present invention as described in this document. Thus, the prefix portion may be a label applied to particular values within each triple in a triple set.

Embodiments of another aspect of the present invention include a data storage system comprising a database controller embodying the present invention, and the plurality of storage units.

The storage units may each be computing resources, for example, they may each include a storage unit, in addition to a processor, memory, and/or additional components such as a network interface card, a motherboard, input/output devices.

Such a computing apparatus may be, for example, a server. In addition to storage functionality the computing apparatus is configured to perform processing operations and to communicate with other storage units in a distributed network of storage units and/or with a centralised controller.

Embodiments may be provided in the form of a system comprising a database controller embodying the invention and a plurality of computing apparatuses embodying the invention, configured to operate as a distributed network of storage units.

In such embodiments, the plurality of computing apparatuses may be configured to operate cooperatively to form the database controller.

Embodiments of another aspect of the present invention include a method for execution by a database controller of a database of information encoded as a set of data items, the method comprising: dividing the set of data items into a series of segments, each segment comprising each of the data items falling within defined lower limit and upper limit values of an ordering metric used to place the data items in order; and managing the distribution of the series of segments among a plurality of storage units, including selecting which segments from among the series of segments to co-locate on the same storage unit based on historical data representing read operations performed on the database.

For example, the method may be computer-implemented.

Embodiments of another aspect of the present invention include: software which, when executed by a computing apparatus or a plurality of interconnected computing apparatuses, causes the computing apparatus or plurality of computing apparatuses to function as a database controller embodying the invention, or a data storage system embodying the invention, or to execute a method embodying the invention.

Such software may be a program or suite of programs, and may be stored on a non-transitory storage medium.

Furthermore, invention embodiments may include a suite of computer programs which, when executed by a distributed network of computing apparatuses, cause the distributed network of computing apparatuses to function as a system embodying the invention.

Furthermore, embodiments of the present invention include a computer program or suite of computer programs, which, when executed by a system of computing apparatuses including a distributed network of storage units cause the system to perform a method embodying the present invention.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

Features of the present invention will now be described, purely by way of example, with reference to the accompanying drawings, in which:-

Figure 1 illustrates a data storage system having a database controller embodying the present invention;
Figure 2 illustrates an exemplary system architecture; and

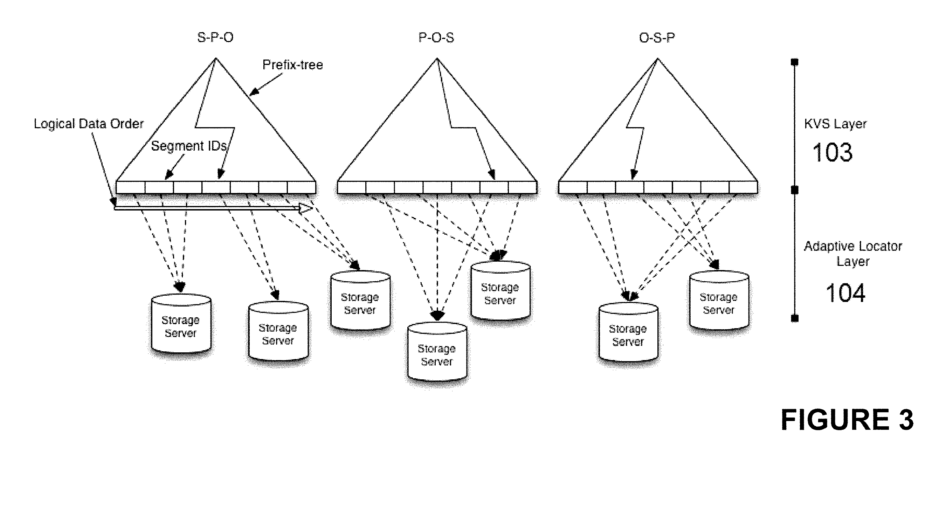

Figure 3 is a diagrammatic representation of the functionality of the segment control module and the adaptive segment locator module.

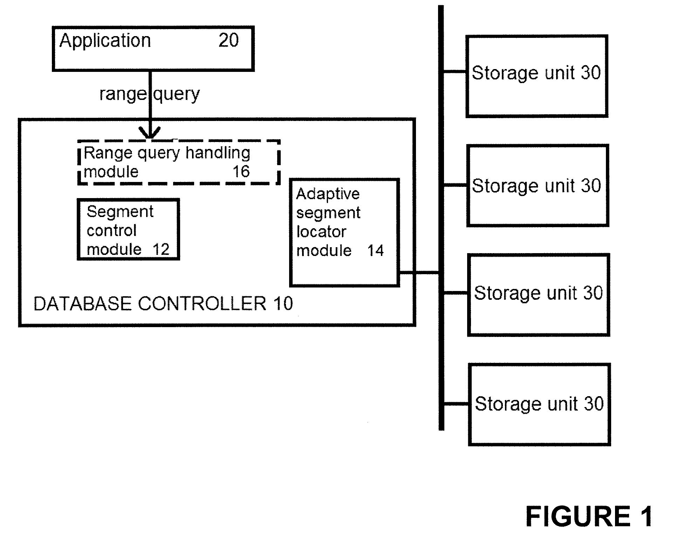

Figure 1 illustrates a data storage system. The data storage system comprises a database controller 10 and a plurality of storage units 30.

The plurality of storage units 30 are in data communication with one another and with the database controller via a wired or wireless network, illustrated as a bus on Figure 1 for representative purposes. Data connections within the database controller 10 are not illustrated since it is assumed that the individual modules are configured to exchange data as and when they require in performing their functions. The application 20 may be considered as exterior or interior to the data storage system, and is significant as being the source of a range query. It may be that the application 20 is a functional layer operating within the data storage system, for example, a SPARQL query interface, which receives queries from external applications and processes them into a form suitable for forwarding to the range query handling module 16.

The database controller 10 is a functional entity which is connectable to the storage units storing the encoded database information. The database controller 10 of Figure 1 is configured to handle range queries via a dedicated range query handling module 16. The range query handling module 16 is illustrated with a dashed border, indicating that is an optional module. It may be that other entities are responsible for other database control functions, for example, insertion of new data and data updates, and handling access for applications, so that the database controller 10 embodying the present invention does not necessarily have exclusive control over the database, merely control over some functionality. The database controller 10 may be realised as a dedicated hardware device or by software running on one or more computers, which one or more computers may include servers having storage units storing the triples. The database controller may be a functional module running on a master server or some other centralised device having responsibility for controlling the storage units 30. For example, the amount of data held by the segment control module 12 may be so large that it is spread across a plurality of servers.

The database controller 10 comprises a segment control module 12, an adaptive segment locator module 14, and a range query handling module 16.

The segment control module 12 is configured to divide the set of data items into a series of segments, each segment comprising each of the data items falling within a defined lower limit and upper limit from the set of data items when the data items are placed in an order determined by an ordering metric. In other words, the segment control module 12 is configured to divide the set of data items into a series of ordered segments, each segment comprising each of the data items falling within defined lower limit and upper limit values of an ordering metric used to place the data items in order.

Dividing the set of data items into a series of data segments may be performed by specifying a range of ordering metric values covered by each data segment, so that each data item having an ordering metric value falling into the range covered by a data segment is a member of that data segment. In effect, the divisions between data segments are overlaid onto a logical order defined by the data items when ordered by the ordering metric. The segments form a series because they can be logically ordered by applying the ordering metric to the ranges defined by the segments. The segment IDs themselves may define the range of the data segment. The segments may form a non-overlapping series. The segments do not necessarily cover the entire range of ordering metric values, and there may be gaps between neighbouring segments. The segments and segment IDs provide a mechanism by which the location (in terms of the physical storage unit upon which the data item is stored) of a data item can be identified. It can be determined which segment a data item belongs to, and each segment is allocated to a single storage unit. Effectively, a segment is a defined range of ordering metric values within which all of the data items are stored together on a single, identifiable storage unit. The storage unit is identifiable by referring to the mapping of the adaptive segment locator module.

An ordering metric is a set of rules which enable comparisons between data items to establish which has a higher or lower value than the other. Thus data items have a value in terms of the ordering metric. The ordering metric value may be an inherent property of the data item itself. For example, if the data items are strings of alphanumeric symbols, then the ordering metric may be alphanumerical order, so that each string, or even each portion of a string, is/represents an alphanumerical value or a value of the alphanumerical ordering metric. As a further optional component, it may be that the ordering metric value is partially an inherent property of the data item itself and partially based on knowledge of the data item derived from elsewhere (such as the database itself). For example, it may be that data items are string objects and the ordering metric is alphanumerical order, but that the data items are given an additional prefix based on a derived property of the data item. Thus, a coarse sorting of the data items is enabled. For example, in hierarchical data structures, each data item may be given an additional prefix (effectively as header data preceding the payload of the data item) specifying the name of the parent resource. Such an embodiment would enable data items to be coarsely sorted based on their parent resources, and then within those groups to be sorted into the alphanumerical order of the data item payload. The ordering metric is selected so that it is consistent and repeatable and may further include one or more rules for breaking ties. Exemplary ordering metrics are alphabetical or alphanumerical. Any character or string of characters has a value in terms of an alphanumerical metric and/or an alphabetical metric.

The segment control module 12 may store a prefix tree which represents an identifier of each of the segments along with (or which itself represents) the range of ordering metric values of data items attributed to that segment. The prefix tree may otherwise be referred to as, for example, a Trie or a prefix search tree, and is used to construct separate indices for the segments. Consider an exemplary embodiment in which the data items are represented as string objects. Working from the first string character forwards (and possibly with an artificially introduced common root), any pair of string objects follow a common path in the prefix tree until a character is reached at which the two diverge, at which point the paths diverge. Therefore, common beginnings to string objects are stored only once rather than being duplicated, and storage space is saved. Since the prefix tree is constructed by working forwards from the beginning of the string object, a leaf of the trie corresponds to a prefix portion of one or more data items, so each leaf of the tree is a different prefix portion of data items in the set of data items. It can be appreciated that a prefix portion of string objects defines a range of alphabetical values. Any string having the prefix portion at the start is contained in the defined range. Hence, the prefix portion represented by the leaf of the tree is itself an indication of a range of ordering metric values. The prefix tree structure may be large, too large to maintain on a single server. In such cases, the prefix tree is stored and maintained by a set of servers which communicate with one another through network protocols such as virtual synchrony. For example, the set of servers may be dedicated to the task of managing the prefix tree, and the network protocols may be any strong consistency network protocol. The storage units upon which the segments are stored may be separate from the prefix tree server or servers (although they may belong to the same network) and dedicated to read/write operations.

In a particular implementation example, the data items may be triples specifying a value of each of three elements: subject (S), predicate (P), object (O). The information may be encoded three times: in the format SPO, in the format OSP, and in the format POS. Therefore, there are three data sets and range queries specifying values of any pair of elements first can be handled efficiently. The dividing into segments may be performed in a manner which is based purely on numbers of data items falling into each segment. For example, the range of ordering metric values for each segment, and hence the segment ID, may be selected so that a predetermined number of data items is contained in the segment. Otherwise, it may be that the data elements themselves are used to indicate how the data items should be ordered into segments. For example it may that, in the SPO string format, triples with the same subject belong to the same segment, so that the segment IDs are the different values of S, and the prefix tree is a tree of the S strings. Other heuristics can be defined depending on implementation details. For example, using the same concept, for instance use the OSP variant and create segments with the same object.

The adaptive segment locator module 14 is configured to manage the storage location of segments among the plurality of storage units 30. The adaptive segment locator module 14 may be configured to co-locate data segments which contain data items which have often been accessed in the same graph traversal operations, based on acquired or observed performance statistics.

The adaptive segment locator module 14 is configured to manage the distribution of the series of segments among a plurality of storage units, including selecting which segments from among the series of segments to co-locate on the same storage unit based on historical data representing read operations performed on the database. Managing the distribution includes at least initially allocating segments to storage units and may additionally include re-distributing the segments among the storage units. Managing the distribution also includes maintaining a record of the storage unit upon which each segment is stored. Re-distribution may be triggered by particular events and/or may be periodical. A particular event may be system idle time, or may be when a predetermined number of read operations have occurred since the last distribution. Alternatively, the adaptive segment locator module 14 may have a monitoring function which uses read operation statistics to calculate the optimum distribution of segments to storage unit IDs on a continual basis, and a redistribution is triggered when there is more than a threshold level of difference between the actual distribution and the optimum distribution. The optimum may be determined by using metrics such as the association metric discussed below.

The process of distribution is the allocation/assignment of a segment to a storage unit, and hence may be a process writing data items to a storage unit, or may include instructing a transfer of data items from one storage unit to another. A segment being distributed/assigned/allocated to a storage unit denotes that each of the data items belonging to that segment are stored on the storage unit (and are possibly grouped together in a particular storage area). Data items may or may not be stored in a logical order within their segments. Additional processing at the storage unit will be required if the data items are not stored in a logical order. Response to range queries will impose less of a processing burden on the storage units if a logical order, for example, as established by an ordering metric such as alphabetical order or the ordering metric used to order the segments is maintained among the data items within each segment.

Redistributing the segments among the storage units may result in some movement of data. The associated network traffic and read/write operations may become a performance bottleneck. It may be that smaller segment sizes alleviate the bottleneck to some extent. Hence, in some implementations, it may be that when the network traffic caused by moving segments between storage units reaches a predetermined threshold value (which could be one of a step-wise system of values) the segment control module is instructed to perform the process of dividing the set of data items into segments again, and with smaller segment sizes (perhaps smaller on average than current average size, perhaps a smaller maximum size than the current maximum size, perhaps a smaller fixed size than the current fixed size). Of course, the amount of data which the segment control module 12 is required to maintain increases as segment size decreases, so it may be that there is a maximum number of segments which cannot be exceeded, or that some override exists so that once a predetermined threshold number of segments is reached, only if the network traffic reaches a corresponding threshold (which may be higher than the threshold set for an ordinary redividing request) will the number of segments be further increased.

As another performance consideration, the cost of searching through the data stored by the segment control module 12, for example, the prefix tree, is affected by the length of prefixes. Small data segments require longer prefixes to identify the individual segments and hence the performance cost of searching the prefix tree is greater. Therefore, if the time taken to retrieve data from the segment control module 12 is a pertinent performance consideration, then it may be that the length of prefix (i.e. segment ID) is capped, and hence the segments are prevented from becoming too small in terms of number of data items contained therein. The size of data segment and the length of segment ID or prefixes is configurable according to performance requirements. Configurable variables such as size of data segment and length of segment ID may be adjustable by a system administrator or a system of thresholds and consequential reconfigurations may be implemented in the functionality of the segment control module 12 and the adaptive segment locator module 14. Heuristic rules and equations may be used to assist or dictate selecting the size of data segments or length of segment IDs.

It may be that segment sizes and/or segment IDs are determined by heuristic rules based on the domain of information encoded in the database. For example, consider an example in which the data items are triples. It may be that the triples are stored as strings in an SPO format, and that the segments are identified by the values of 'S', so that all triples sharing the same subject are stored in the same segment. As an example applicable to a semantic RDF data model, it may be that the segment control module 12 is configured to group triples of child resources together with those of their immediate parents. Child and parental resources are linked using rdf:type as in the following example, where lecturer is a child of faculty member.

(*ns*: Lecturer *rdf:type ns*:Faculty_Member)

When variable segment sizes are allowed, the topology of RDF graph can provide heuristic rules. For instance, data segment containing graph high degree vertices should be larger than those containing low degree vertices. In effect, when the set of data items are triples in the SPO format, the segments can be defined by the subject values. Other heuristics can be defined, using the same concept, for instance use the OSP variant and create segments with the same object.

Once the segments have been accessed in read operations a predetermined number of times, it may be that usage based rules for dividing the set of data segments into segments replace or are combined with heuristic domain-based rules. In such cases, it may on occasion become necessary for the data segment control module 12 to re-segment data and re-index data segments. When it happens, based on query history, the data segment control module 12 is configured to identify when data items with similar values of the ordering metric (i.e. in absolute terms within a predetermined threshold distance of one another, or in relative terms within a predetermined threshold number of places when the data items are placed in order) have been accessed as part of the same graph operation a threshold number of times, and to divide the data items into segments such that said data items are included in the same segment. Historical information can be obtained from system log or the logging information from adaptive segment locator module 14.

The adaptive segment locator module is configured to apply a metric for measuring the association strength between data items at the segment level to determine whether or not a segment should be co-located with another segment. For example, it may be the adaptive segment locator module 14 is configured to calculate the association strength between two segments by calculating the association strength between each pairing of data items comprising one data item from each of the two segments, and to assign the highest of the calculated association strengths as the association strength between the two segments. Alternatively, an average, such as a median or mean, of the calculated association strengths between pairings of data items could be assigned as the association strength between the two segments.

Given a data segment g, a server S, the association between two data items may be calculated by a metric/function represented here by $\delta(t, s)$, the locality of a data segment is formalised as follows:

$$\text{locality}(g) = \begin{cases} \text{server}(t), & \exists g_i \in \text{server}(t). \left(g \neq g_i \wedge \exists t' \in g. \left(\exists t'' \in g_i. \delta(t',t'') > \delta(t,s)\right)\right) \\ \text{server}(s), & \exists g_i \in \text{server}(t). \left(g \neq g_i \wedge \forall t' \in g. \left(\forall t'' \in g_i. \delta(t,s) > \delta(t',t'')\right)\right) \end{cases}$$

Based on the association strength $\delta(t, s)$ calculated by the adaptive segment locator module 14, a segment $g$ is moved to the location of data item s, if $\delta(t, s)$ is stronger than that between any local data items from a different segment and one of the data items from $g$ . $g$ stays in the same server, if there is a data item strongly associated with one of the data items from the segment. In practice, maximum association can be recorded between segments to avoid calculating association strength between every pair of data items. The function $\delta(t, s)$ measuring the association strength between two data items may comprise one or more components. A component may be proportional to the number of times (as an absolute number or as a proportion of total historical read operations taken into account) that the two data items have been read in the same read operation. A read operation may be a query (comprising one or more range queries) and/or a graph traversal operation.

The range query handling module 16 is configured to receive a range query from an application 20. It may be that the range query handling module 16 is also configured to perform parsing and other processing operations on the received range query to extract the range of ordering metric values, and hence the lower bound and upper bound of said range, of data items which are to be included in the range query results. A range query may comprise bound and unbound values of each of one or more data elements. For example, it may be that a range query specifies a value of one or a pair of data elements, so that that element or pair of elements is bound, and a data item must match the specified value for the bound portion of the range query in order to be included in the query results. The other data element or elements are unbound or variable, so that any value or values of the unbound portion of a data item satisfies the query. Of course, in order to handle the range query effectively, the arrangement of elements within the data items must be conducive to the pattern of bound and unbound data elements specified in the range query. The range queries that are handled most effectively are those in which the bound portion is the data elements appearing first in the data items, at least insofar as they are ordered/valued by the ordering metric, so that a single range of ordering metric values is defined by the bound and unbound data elements specified in the range query.

Once the range of ordering metric values specified by the range query has been extracted or otherwise established, the range query handling module 16 is configured to refer to the segment control module to identify which of the segments contain the upper and lower bounds of the range, and those segments which lie between the segments containing the upper and lower bounds of the range, when the segments are ordered according to the ordering metric. The range query handling module is then configured to refer to the adaptive segment locator module to establish upon which storage units 30 of the plurality of storage units 30 the identified segments are stored. The range query handling module 16 or the adaptive segment locator module 14 is then configured to request data items satisfying the range query from the established storage units, and possible also to aggregate the results and respond to the application 20.

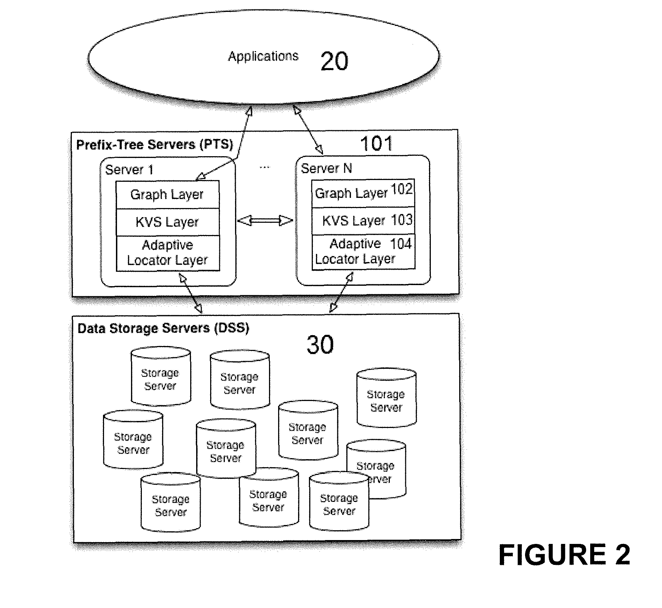

Figure 2 illustrates an exemplary hardware configuration of a data storage system embodying the present invention. The system comprises an application tier 20, a prefix-tree server tier 101, which is exemplary of a database controller and which comprises a number of servers working cooperatively to realise the functionality of the database controller, and the storage tier 30, which comprises a plurality of storage units 30, for example, data storage servers. Of course, the applications 20 may be external to the system, and are illustrated to demonstrate possible implementation of the system.

The prefix tree server tier 101 comprises one or more prefix tree servers which store an index of the data stored across the storage tier 30. The index is provided by a record of segment IDs, which may be a common prefix of the data in the segment. The or each prefix tree server run a stack of software providing functionality including linking between a graph representation of data and the encoded form of the data as stored in the storage tier 30. At the prefix-tree server tier 101, depending on the number of segments and size of segment IDs (prefixes), it may be that multiple servers (illustrated) are needed to maintain the prefix tree. Furthermore, it may be that the information is encoded as more than one set of data items, and the aggregate size of the prefix trees may necessitate more than one server. Each prefix-tree server contains a stack of software which provides the database controller functionality.

The Graph layer 102 is optional and provides some of the functionality of a range query handling module 16 and communicates with applications 20 to convert queries into RDF graph transactions.

The KVS layer 103 is exemplary of a functional unit which is configured to translate a string objects corresponding to a range query into a range of ordering metric values, which can be used to consult the data segment control module 12 to identify which storage units store segments having a range of ordering metric values overlapping with that of the range query. Hence, the graph layer 102 and the KVS layer 103 in collaboration are exemplary of a range query handling module 16. In addition, the KVS layer stores a record of segment IDs, so that a range of ordering metric values can be used to generate a list of one or more segment IDs storing data items having ordering metric values overlapping with the range of the query.

The prefix-tree servers communicate with each other through a communication network. The communication between different prefix-tree servers 101 may be performed using strong agreement primitives such as Virtual Synchronous Total Order Broadcast or Paxos. Even though such primitives are not scalable, implementations are foreseen in which the number of servers remains low in comparison to the number of storage units. Communication between prefix tree servers 101 and storage units 30 may be performed using reliable communication links such as TCP sockets and acknowledgements to ensure the data is persistent. Data consistency may be ensured by prefix tree servers reaching consensus among other prefix tree servers and by issuing read/write operations to storage units.

The storage tier 30 consists of a number of data storage servers being able to maintain local data and communicate with the index layer 10, for example via the adaptive locator layer 104, and among each other through a communication network. Storage may be realised using a distributed Key-value Store. The storage tier 30 may be composed of a set of data storage servers acting as storage nodes with computational power to manage local data sets and communicate with other data nodes through a communication network.

The adaptive locator layer 104 is responsible for distributing, mapping and managing the segments onto the pool of data storage servers (data nodes). Another functionality provided by the prefix tree servers 101 is how data segments are managed within a distributed prefix tree. Many different implementations can be applied. A straightforward one, for example, can be the super-peer architecture, observing the hierarchical structure of the prefix tree. The adaptive locator layer 104 is responsible for the mapping between segment IDs and physical storage nodes (or servers). This layer implements the previously described indexing and segmenting features. That is to say, the adaptive locator layer 104 is exemplary of a software layer which may be used to provide the functionality of the segment control module 12 and the adaptive segment locator module 14.

Exemplary methods and processes will now be set out with reference to an exemplary system in which the database of information is graph data and the data items are triples, which may specifically be RDF triples. In the exemplary system, there are a plurality of PTS servers 101 operating as a database controller 10.

Applications 20 connect to one of the PTS servers 101 using a graph interface such as a graph layer 102. A graph interface may be achieved by a dedicated library, an HTTP-based REST layer, or other equivalent technologies. The graph interface allows the application to write data into the storage layer 30, read single data items, execute graph traversals and execute range queries over the entire set of data items. The following description describes how each of these operations may be performed in a data storage system.

When an application wants to write a data item (e.g. a triple) it issues a write operation to the graph layer 102. The graph layer is configured to convert the triple represented in the issued write operation into a format suitable for storage.

Figure 2 illustrates processes performed at the KVS layer 103 and the adaptive locator layer 104. At the KVS layer a string of characters at the beginning of the data item is followed through the prefix-tree until a leaf is reached, which leaf represents the segment ID of the segment where the data item should be located. For this purpose, the KVS layer 103 may need to communicate with other PTSs storing parts of the prefix-tree for the same data set. The addition of a data item to a segment may also trigger splitting a data segment, if it becomes too big (exceeds a predetermined maximum segment size). For this purpose, the system uses the prefix tree, which is able to maintain the logical order of the segments and, consequently, of the data items.

After discovering the Segment ID, the write operation is then issued to the adaptive locator layer 104. The adaptive locator layer 104 stores a mapping between segment IDs and storage units, and hence is configured to find the storage unit responsible for the segment where the data item should be located and to issue a write operation directly to that server. The mapping between the segment ID and the identity of the storage units is maintained by the adaptive locator layer 104 and can change over time. A mapping example is depicted as dashed arrows in Figure 2. For illustrative purposes, the SPO set of data items are illustrated in a scenario in which sequentially ordered segments are stored in the same server. This is representative of a situation in which the adaptive locator layer 104 has not yet performed optimisation to consider which segments should be co-located on the same storage unit. In the case of the POS and OSP sets of data items, it can be seen that the sequential order of segments (running from left to right at the base of the triangle in descending order of ordering metric value) is not retained in the storage units 30, because the adaptive locator layer 104 has optimised the distribution of segments among storage units based on historical read operation data.

The prefix tree servers 101 may maintain more than one prefix tree, if the system stores the same information encoded in more than one set of data items. Such systems may be implemented in situations where the handling of range queries is very important and different elements of the data item are bound by the range query. For example, in embodiments in which the stored data items are in the RDF format, three sets of data items may be stored (SPO, POS, and OSP). For traversals and scans in Graph data, and also for unstructured data items, a single prefix tree may be sufficient.

The storage units 30 may be configured to store the data on their local disk and may include an in-memory caching mechanism to optimize I/O. Local disk storage of a single data segment may be accomplished by means of an ordered hash table. An ordered hash table is a mechanism which preserves the order of data items within their segments. An ordered hash table provides a means for each storage unit to store the segments and their component data items so that each data item is ordered within the same segment and each segment is ordered with regard to the other segments.

Reading single data items (or triple subjects) is issued in an analogous way as an write operation. The application 20 starts by reading a data item using the graph interface, which will convert it into an operation that can be issued to the KVS layer 103. The KVS layer 103 will calculate the corresponding segment ID by following the path through the prefix tree instructed by the data item, and pass the segment ID on to the adaptive locator layer 104. The adaptive locator layer 104 will calculate the corresponding storage unit address, or some other information which enables the storage unit/server/node on which the segment having the identified segment is stored, and issue a read operation to that storage unit. Graph traversals can be implemented by executing read operations iteratively.

Range queries (also called scans) over the entire set of data items are executed as follows. The applications issue a scan operation to the graph layer 102, giving a triple pattern as parameter. A triple pattern has the same format as a triple, but one or more parts are NULL, indicating that it should be instantiated. For instance, <Subject,NULL,NULL> means a scan over all data that has "Subject" as the subject of a triple. This is then converted into two keys (ordering metric values) in the KVS Layer 103: the lower key and the higher key in the ordered data-set that correspond to the triple pattern. The KVS layer 103 will then use this information to calculate the corresponding lower and higher segment IDs, along with the entire set of segment IDs placed in between.

The list of segment IDs is then be passed on to the adaptive locator layer 104, which will convert the segment IDs to storage unit (Data Storage Server) addresses or other information to identify the storage units upon which the segments having those IDs are stored. The range query will then be executed locally on each storage unit and partial results will be retrieved to the KVS 103 layer. Finally, the KVS layer 103 orders each of the partial results using the order of the initial list of segment IDs. Finally, an iterator over the data is returned to the application.

It may be that the result set is too large to be handled in a single retrieval operation by the KVS layer 103 of the prefix tree server 101. In such a case, the prefix tree server 101 can retrieve part of the data from the storage units 30 and request more data subsequently, while the application 20 is processing the initial part. This system can also be optimized with caching ahead mechanisms, pre-fetching data from disk to memory in the storage units. By co-locating associated data segments in the same storage units, network traffic is minimized and the data satisfying the range query is made available to the application by contacting fewer servers.

In summary, embodiments of the present invention provide a system that co-locates data items that have been frequently read together in the same scan operation based on historical data in order to improve future scan operations that will retrieve data previously located in different servers. The system maintains an order in the identification of segments in which data items are stored in order to improve range query scan operations by avoiding having to query all servers. Invention embodiments include database controllers, systems, data storage systems, methods, software, and programs used to implement distributed storage of data items in a database in a manner which combines usage-based data co-location procedures with ordered storage of segment identifications to optimise scan operations.

**Claims**

1. A database controller for a database of information encoded as a set of data items, the database controller comprising:

    a segment control module configured to divide the set of data items into a series of segments, each segment comprising each of the data items falling within defined lower limit and upper limit values of an ordering metric used to place the data items in order; and
    an adaptive segment locator module configured to manage the distribution of the series of segments among a plurality of storage units, including selecting which segments from among the series of segments to co-locate on the same storage unit based on historical data representing read operations performed on the database.

2. A database controller according to claim 1, further comprising:

    a range query handling module configured to receive a range query on the set of data items, the range query defining an upper bound and a lower bound of ordering metric values, and the range query handling module being configured to respond with a duplicate of each data item from among the set of data items which falls between the defined upper bound and lower bound of ordering metric values when the data items are placed in order with the ordering metric.

3. A database controller according to claim 2, wherein the range query handling module is configured to obtain the duplicates by:

using the segment control module to identify which of the segments have defined upper and lower limits defining a range which at least partially overlaps a range defined by the upper bound and the lower bound;
using the adaptive segment locator to identify which storage units from among the plurality of storage units store the identified segments; and
issuing read requests to the identified storage units for data items falling within the upper bound and lower bound when placed in order by the ordering metric.

4. A database controller according to any of the preceding claims, wherein the selecting which segments from among the series of segments to co-locate on the same storage unit includes calculating a score of an association metric for a plurality of permutations of segment pairs and selecting the segments to co-locate in dependence upon the scores of the association metric for the plurality of permutations of segment pairs.

5. A database controller according to claim 4, wherein the selecting which segments from among the series of segments to co-locate on the same storage unit further includes performing an algorithm to optimise the aggregate score of the association metric between pairs of segments which are co-located on the same storage unit.

6. A database controller according to claim 4 or 5, wherein the historical data representing read operations performed on the database includes a record of data items which are read in the same read operations; and
the score of the association metric for a pair of segments includes a component proportional to the number of times a data item from both of the pair of segments was read in the same read operation; and/or
the score of the association metric for a pair of segments includes a component proportional to the number of times the pair of data items, one from each of the pair of segments, which were read in the same read operation the most times, were read in the same read operation.

7. A database controller according to any of the preceding claims, wherein the score of the association metric for a pair of segments is calculated by applying the association metric at a data item level including finding the pair of data items, one from each of the pair of segments, having the highest score of the association metric of any such pair, and setting said highest score as the score of the association metric between the pair of segments.

8. A database controller according to any of the previous claims, wherein each segment is identifiable from among the series of segments by a segment ID; and
the segment control module is configured to maintain a record of, for each segment, the segment ID and the defined upper and lower limit of the segment.

9. A database controller according to claim 8, wherein the segment ID of each segment is a prefix portion of data which is common to each of the data items within the segment and which prefix portion defines the upper limit and the lower limit of the segment; and/or
wherein the prefix portion of a data item is an opening portion of the data forming the data item and forms some or all of the data used to determined the order of data items by the ordering metric.

10. A database controller according to claim 9, wherein the record maintained by the segment control module is a prefix tree.

11. A database controller according to any of the preceding claims, wherein:

the database of information is also encoded as one or more additional sets of data items and the segment control module and the adaptive segment locator module are configured to treat each of the set of data items and the one or more additional sets of data items as a separate set of data items;
each data item in the set of data items has a corresponding data item encoding the same information in each additional data set, and data elements forming the data item are ordered differently in the data item and each corresponding data item.

12. A database controller according to any of the preceding claims, wherein the database of information is a graph database and the set of data items encoding the graph database is a set of triples each comprising a value of each of three triple elements.

**13.** A data storage system comprising a database controller according to any of the preceding database controller claims and the plurality of storage units.

**14.** A method for execution by a database controller of a database of information encoded as a set of data items, the method comprising:

dividing the set of data items into a series of segments, each segment comprising each of the data items falling within defined lower limit and upper limit values of an ordering metric used to place the data items in order; and managing the distribution of the series of segments among a plurality of storage units, including selecting which segments from among the series of segments to co-locate on the same storage unit based on historical data representing read operations performed on the database.

**15.** Software which, when executed by a computing apparatus or a plurality of interconnected computing apparatuses, causes the computing apparatus or plurality of computing apparatuses to function as the database controller of claims 1 to 12, or the data storage system of claim 13, or to execute the method of claim 14.

FIGURE 1

FIGURE 2

**FIGURE 3**

Europäisches
Patentamt

European
Patent Office

Office européen
des brevets

**EUROPEAN SEARCH REPORT**

Application Number

EP 13 16 8088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIAQUAT ALI ET AL: "3rdf: Storing and Querying RDF Data on Top of the 3nuts Overlay Network", DATABASE AND EXPERT SYSTEMS APPLICATIONS (DEXA), 2011 22ND INTERNATIONAL WORKSHOP ON, IEEE, 29 August 2011 (2011-08-29), pages 257-261, XP032094886, DOI: 10.1109/DEXA.2011.1 ISBN: 978-1-4577-0982-1 * abstract * * page 258, left-hand column, paragraph 3 - page 259, right-hand column, paragraph 4; figure 1 * | 1-3, 12-15 | INV. G06F17/30 |
| A | Luis Galárraga ET AL: "Partout: A Distributed Engine for Efficient RDF Processing", , 21 December 2012 (2012-12-21), XP055105773, Retrieved from the Internet: URL:http://arxiv.org/abs/1212.5636 * abstract * * page 2, right-hand column, paragraph 4 - page 8, left-hand column, paragraph 2 * | 1-3, 12-15 | |

TECHNICAL FIELDS
SEARCHED      (IPC)

G06F

~~The present search report has been drawn up for all claims~~

| Place of search | Date of completion of the search | Examiner |
|---|---|---|
| Munich | 18 March 2014 | Wohner, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................

& : member of the same patent family, corresponding document

EPO FORM 1503 03.82 (P04C01)

Europäisches
Patentamt

European
Patent Office

Office européen
des brevets

Application Number

EP 13 16 8088

---

**CLAIMS INCURRING FEES**

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

**LACK OF UNITY OF INVENTION**

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3, 12-15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 13 16 8088

The Search Division considers that the present European patent application does not comply with the requirements of unity of invention and relates to several inventions or groups of inventions, namely:

1. claims: 1-3, 12-15

   relates to how to handle range queries against a database of information encoded as a set of data items (e.g. a graph database of triples) when segments of said database are adaptively co-located on the same storage unit within a plurality of storage units based on historical data representing read operations performed on the database
   ---

2. claims: 4-7

   relates to how to calculate a score of an association metric for a plurality of permutations of database segment pairs of a database of information encoded as a set of data items (e.g. a graph database of triples) when segments of said database are adaptively co-located on the same storage unit within a plurality of storage units based on historical data representing read operations performed on the database
   ---

3. claims: 8-10

   relates to how to index database segments of a database of information encoded as a set of data items (e.g. a graph database of triples) when segments of said database are adaptively co-located on the same storage unit within a plurality of storage units based on historical data representing read operations performed on the database
   ---

4. claim: 11

   relates to how to redundantly store a database of information encoded as a set of data items (e.g. a graph database of triples) when segments of said database are adaptively co-located on the same storage unit within a plurality of storage units based on historical data representing read operations performed on the database
   ---